# EUROPEAN PATENT SPECIFICATION

(11) **EP 4 325 610 B1**
(45) Date of publication and mention of the grant of the patent: **23.09.2026**
(21) Application number: 22846133.1
(22) Date of filing: 13.07.2022
(51) Int. Cl.: H01M 10/04, H01M 10/0585

(54) **ELECTRODE LAMINATE HEATING UNIT AND LAMINATION APPARATUS COMPRISING SAME**
ELEKTRODENLAMINATERWÄRMUNGSEINHEIT UND LAMINIERUNGSVORRICHTUNG DAMIT
UNITÉ DE CHAUFFAGE DE STRATIFIÉ D'ÉLECTRODE ET APPAREIL DE STRATIFICATION LA COMPRENANT

(30) Priority: 20.07.2021 KR 20210094869
(43) Date of publication of application: 21.02.2024
(73) Proprietor: LG Energy Solution, Ltd., Seoul 07335 (KR)
(72) Inventor: CHO, Innwhan, Daejeon 34122 (KR); PARK, Minyoung, Daejeon 34122 (KR)
(74) Representative: Plasseraud IP
(86) International application number: PCT/KR2022/010218
(87) International publication number: WO 2023/003263

(56) References cited:
- WO-A1-2018/116542
- JP-A- 2000 208 137
- JP-A- 2000 208 137
- KR-A- 20190 000 589
- KR-A- 20200 059 001
- KR-A- 20200 109 042
- KR-A- 20200 109 042

## Description

### [Technical Field]

The present disclosure relates to an electrode laminate heating unit and a lamination apparatus comprising the same.

### [Background Art]

As technology development and demand for mobile devices increase, rechargeable secondary batteries are widely used as energy sources for various mobile devices. In addition, the secondary battery is also attracting attention as an energy source for electric vehicles, hybrid vehicles, etc., which is being proposed as a way to solve the air pollution of existing gasoline or diesel vehicles.

The secondary battery is classified into a coin-type battery, a cylindrical battery, a prismatic battery, and a pouch-type battery depending on the shape of the battery case. In general, an electrode assembly embedded in a battery case is classified into a jelly-roll type wound with a separator interposed between a positive electrode and a negative electrode, a stack type in which a plurality of unit cells with a separator interposed between a positive electrode and a negative electrode are stacked, and a stack/folding type in which unit cells are folded with a separation film.

The electrode assembly may be manufactured as an electrode laminate comprising an electrode and a separator, and for example, the stacked electrode assembly may be manufactured by stacking a plurality of unit cells formed by cutting electrode laminate. Such an electrode laminate can be prepared by heating and rolling an electrode and a separator to join them.

Meanwhile, when heating the electrode and the separator for the formation of electrode laminate, the electrode may be twisted, causing a problem of electrode misalignment, and this may occur when the temperature of the heating device fluctuates, especially as in the early and late stages of operation of the heating device. In addition, there may be a problem in that it is difficult to check the misalignment of the electrodes in the heating device in a closed state for heating.

KR 2020 0109042 A discloses a lamination device.

### [Prior Art Document]

### [Patent Document]

(Patent Document 1) Korean Laid-open Patent Publication No. 10-2021-0058170

### [Disclosure]

### [Technical Problem]

It is an object of the present disclosure to provide an electrode laminate heating unit capable of measuring a position change of an electrode due to a temperature change of a heating portion and a lamination apparatus comprising the same.

It is another object of the present disclosure to provide an electrode laminate heating unit capable of inspecting misalignment of electrodes in a heating portion and a lamination apparatus comprising the same.

It is still another object of the present disclosure to provide an electrode laminate heating unit capable of improving the misalignment of electrodes by identifying the trend of the misalignment of the electrodes, and a lamination apparatus comprising the same.

The invention is as defined by the appended claims.

### [Technical Solution]

The present disclosure can solve the above problems by measuring the position of the electrode in the region where the electrode laminate passes through the heating portion.

The present invention relates to an electrode laminate heating unit, including a heating portion comprising an electrode and a separator and heating the electrode laminate transferred in one direction; and a vision portion for measuring a position of the electrode in a region where the electrode laminate passes through the heating portion, the heating portion (210) includes an accommodating region, the accommodating region being a hole (h) or a groove (g) in which the vision portion (220) is configured to be disposed.

In addition, the present invention relates to an electrode laminate lamination apparatus, including a conveying unit for conveying the electrode laminate comprising an electrode and a separator; a heating unit for heating the electrode laminate; and a lamination unit for rolling the electrode laminate, wherein the heating unit is as defined herein.

### [Advantageous Effects]

As one of the effects of the present disclosure, it is possible to provide an electrode laminate heating unit capable of measuring a position change of an electrode due to a temperature change of the heating portion, and a lamination apparatus comprising the same.

As another effect of the present disclosure, it is possible to provide an electrode laminate heating unit capable of inspecting misalignment of electrodes inside the heating portion, and a lamination apparatus comprising the same.

As still another effect of the present disclosure, it is possible to provide an electrode laminate heating unit capable of improving the misalignment of the electrode by identifying the trend of the misalignment of the electrode, and a lamination apparatus comprising the same.

### [Description of Drawings]

FIG. 1 is a cross-sectional view of the electrode laminate lamination apparatus according to an embodiment of the present invention.
FIG. 2 is a perspective view of the heating portion according to an embodiment of the present invention and an enlarged cross-sectional view of region A.
FIG. 3 is a perspective view of the heating portion according to another embodiment of the present invention and an enlarged cross-sectional view of region B.
FIG. 4 is a perspective view of the vision portion according to an embodiment of the present invention.

### [Best Mode]

Hereinafter, an embodiment of the present invention will be described in detail with reference to the accompanying drawings. In the drawings, all or part of each configuration may be exaggerated for convenience of description.

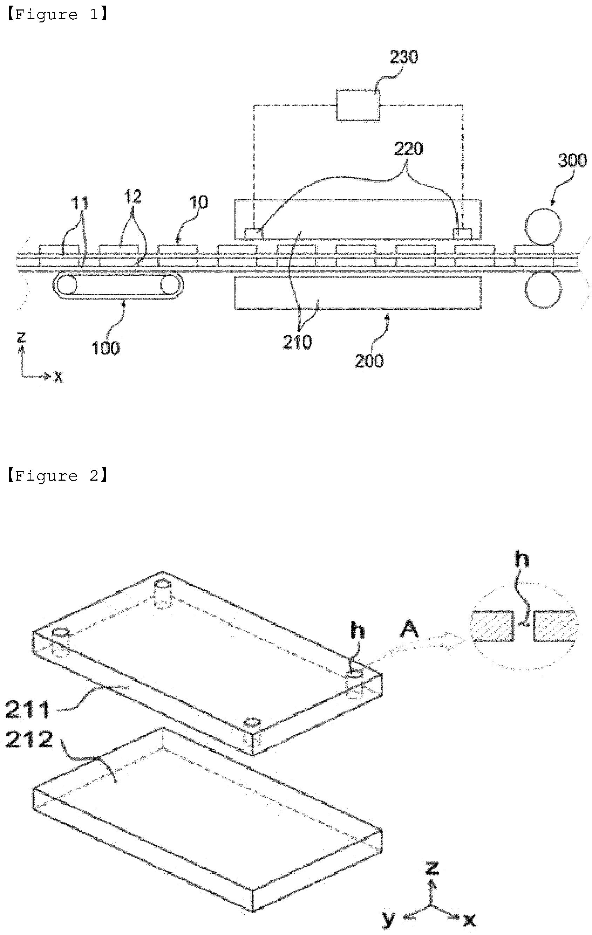

FIG. 1 is a cross-sectional view of an electrode laminate lamination apparatus according to an embodiment of the present invention.

Referring to the drawing, the lamination apparatus according to an embodiment of the present invention comprises the conveying unit 100 for transferring the electrode laminate 10 comprising the separator 11 and the electrode 12, the heating unit 200 for heating the electrode laminate 10, and the lamination unit 300 for rolling the electrode laminate.

The electrode laminate 10 may have a structure in which the separator 11 and the electrode 12 are alternately disposed. For example, as shown in the drawing, the electrode laminate 10 may have a structure in which a first separator 11A, a first electrode 12A, a second separator 11B, and a second electrode 12B are sequentially stacked. In this case, the first electrode 12A may be a negative electrode, and the second electrode 12B may be a positive electrode.

However, the configuration, shape, arrangement form, etc. of the electrode laminate 10 are not limited to the structure shown in the drawings. For example, the electrode laminate 10 may include more or fewer separators 11 and/or electrodes 12 than those shown in the drawings. If necessary, the separator 11 as well as the electrode 12 of the electrode laminate 10 may also be cut.

The conveying portion 100 may serve to transport the electrode laminate 10. The conveying portion 100 may be a conveyor belt, but is not limited thereto. The conveying portion 100 may transport the electrode laminate 10 in the x direction (x) and supply it to the heating unit 200.

The heating unit 200 may serve to heat the electrode laminate 10, thereby increasing bonding strength between the separator 11 and the electrode 12.

The heating unit 200 may comprise the heating portion 210 that heats the electrode laminate 10 transferred in one direction, and the vision portion 220 for measuring the position of the electrode 12 in a region where the electrode laminate 210 passes through the heating portion 210. In addition, it may further include a storage portion 230 for collecting position information of the electrode 12 measured by the vision portion 220.

The heating portion 210 may comprise a heating device such as a heater, and thus the electrode laminate 10 can be heated by irradiating a heat source to the electrode laminate 10.

The heating portion 210 may comprise a plurality of heating portions 210. For example, it may include the first heating portion 211 and the second heating portion 212 disposed on each of both surfaces of the electrode laminate 10. Each of the first heating portion 211 and the second heating portion 212 disposed on each of both surfaces of the electrode laminate 10 may irradiate a heat source to each of both surfaces of the electrode laminate 10. As described above, the electrode laminate 10 may have a structure in which the first separator 11A, the first electrode 12A, the second separator 11B, and the second electrode 12B are sequentially stacked, and thus the first heating portion 211 may be disposed on the second electrode 12B, and the second heating portion 212 may be disposed on the first separator 11A.

Each of the first heating portion 211 and the second heating portion 212 may have a structure overlapping each other in the z direction (z), but is not limited thereto. The first heating portion 211 and the second heating portion 212 may move in a z-direction (z) and in a direction opposite to the z-direction (z), and thus when the heating portion 210 is operated, the first heating portion 211 and the second heating portion 212 may come close to each other and closed, and when the heating portion 210 is stopped, the first heating portion 211 and the second heating portion 212 may be separated from each other and opened, but is not limited thereto.

The heating portion 210 has an accommodating region in which a vision portion 220 to be described later is disposed. Meanwhile, as described above, the heating portion 210 may comprise a plurality of heating portions 210, and for example, may comprise the first heating portion 211 and the second heating portion 212 disposed on each of both surfaces of the electrode laminate 10. In this case, only some heating portions 210 of the plurality of heating portions 210 may have an accommodating region in which the vision portion 220 is disposed. For example, as shown in the drawing, the first heating portion 211 disposed on the second electrode 12B may have an accommodating region, and the second heating portion 212 may not have an accommodating region. Each of the plurality of heating portions 21C may have an accommodating region in which the vision portion 220 is disposed.

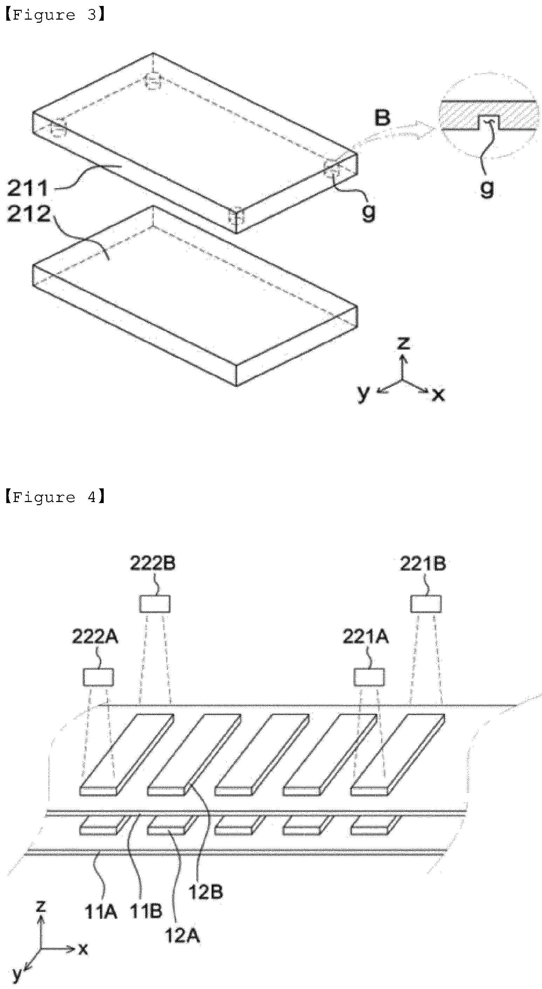

An exemplary structure of the accommodating region of the heating portion 210 will be described in detail with reference to FIGs. 2 and 3.

The vision portion 220 may serve to measure the position of the electrode 12 and may comprise a vision apparatus such as a camera.

Specifically, the vision portion 220 may measure the position of the electrode 12 in a region where the electrode laminate 10 passes through the heating portion 210. In this regard, the vision portion 220 may be disposed on the electrode laminate 10 in a region where the electrode laminate 10 passes through the heating portion 210. For example, the vision portion 220 may be disposed on a surface facing the electrode laminate 10 of the heating portion 210.

Meanwhile, the vision portion 220 may be disposed on only one surface of both surfaces of the electrode laminate 10. For example, as described above, the electrode laminate 10 may have a structure in which the first separator 11A, the first electrode 12A, the second separator 11B, and the second electrode 12B are sequentially stacked, and the vision portion 220 may be disposed only on the second electrode 12B disposed on the uppermost side, and may not be disposed on the first separator 11A. The vision portion 22C may be disposed on the other surface of both surfaces of the electrode laminate 10, that is, only on the first separator 11A, or on each of both surfaces of the electrode laminate 10.

As described above, the vision portion 220 may be disposed in the accommodating region of the heating portion 210. In this case, the vision portion 220 may be disposed in the accommodating region of the heating portion 210 in a form in which at least a portion of the vision portion 220 is embedded in the heating portion 210. However, depending on the design, the vision portion 220 may be disposed in a form in which the vision portion 220 protrudes on the surface of the heating portion 210 facing the electrode laminate 10. In addition, if the heating portion 210 comprises a plurality of heating portions 210, only some heating portions 210 of the plurality of heating portions 210 may have an accommodating region in which the vision portion 220 is disposed, and it goes without saying that the vision portion 220 may not be disposed in the heating portion 210 that does not have an accommodating region.

The vision portion 220 may measure the position of the electrode 12 when the temperature of the heating portion 210 is changed. For example, the vision portion 220 may measure the position of the electrode 12 in at least one of the early and late stages of operation of the heating portion 210. However, it is natural that the vision portion 220 can measure the position of the electrode 12 even when there is no temperature fluctuation of the heating portion 210.

Meanwhile, when the temperature of the heating portion 210 fluctuates, as in the early and late stages of operation of the heating portion 210, the position of the electrode 12 may be changed. However, there may be a problem that it is difficult to measure the position of the electrode 12 generated inside the heating portion 210 in a closed state during operation. According to an embodiment of the present invention, the present invention may have the effect of allowing the identification of change in the position of the electrode 12 due to the change in the temperature of the heating portion 210, by introducing a vision portion 220 that measures the position of the electrode 12 in the region passing through the heating portion 210. In addition, the present invention may have the effect that the position of the electrode 12 passing through the inside of the heating portion 210 can be measured even when the heating portion 210 is closed during the operation of the heating portion 210.

Meanwhile, the vision portion 220 may measure the positions of the first electrode 12A and/or the second electrode 12B depending on the intensity of light transmitted through the electrode laminate 10. For example, the vision portion 220 transmits strong light to the electrode laminate 10, thereby measuring not only the position of the second electrode 12B disposed on the uppermost side of the electrode laminate 10 but also the position of the first electrode 12A disposed inside may be measured. Depending on the design, the vision portion 220 may also measure the position of the separator 11.

The storage portion 230 may serve to collect position information of the electrode 12 measured by the vision portion 220. Accordingly, through the information collected in the storage portion 230, it is possible to identify a misalignment trend of the electrode 12 and prepare a method for improving the misalignment of the electrode 12.

The lamination unit 300 may perform a role of rolling the electrode laminate 10. The lamination unit 300 may be composed of a pair of rollers facing each other, and the electrode laminate 10 may be bonded by applying pressure to the electrode laminate 10 passing through the pair of rollers.

FIG. 2 is a perspective view of the heating portion according to an embodiment of the present invention and an enlarged cross-sectional view of region A.

Referring to the drawing, the heating portion 210 has an accommodating region in which the vision portion 220 is disposed, and the accommodating region has the shape of a hole (h).

The accommodating region of the shape of the hole h may be formed by forming a hole (h) penetrating the heating portion 210 in the z-direction (z) in a partial region of the heating portion 210. The vision portion 220 is disposed in each of the accommodating regions in the shape of the hole (h).

However, the structure of FIG. 2 is an exemplary structure that the accommodating region of the heating portion 210 may have, and it is not intended to limit the structure of the accommodating region to the illustrated structure. The shape, diameter, number, and formation method of the holes (h) that are the accommodating regions are not particularly limited, and if it is a space in which the vision portion 220 can be disposed, other conditions may be variously applied depending on the design.

FIG. 3 is a perspective view of a heating portion according to another embodiment of the present invention and an enlarged cross-sectional view of region B.

Referring to the drawing, the accommodating region of the heating portion 210 has the shape of a groove (g).

The accommodating region of the shape of the groove (g) may be formed by removing a portion of the heating portion 210 in the z direction (z) in some areas of the heating portion 210 to form a groove (g) thinner than the thickness of the heating portion 210 in the z direction (z). The groove (g) may be formed on a surface of the heating portion 210 facing the electrode laminate 10. That is, the groove (g) may be formed by removing a portion of the heating portion 210 in the z direction (z) from one side of the heating portion 210 facing the electrode laminate 10 to the other side. A vision portion 220 is disposed in each of the accommodating regions in the shape of the groove (g).

However, the structure of FIG. 3 is an exemplary structure that the accommodating region of the heating portion 210 may have, and it is not intended to limit the structure of the accommodating region to the illustrated structure. The shape, diameter, number, and formation method of the grooves (g) that are the accommodating regions are not particularly limited, and if it is a space in which the vision portion 220 can be disposed, other conditions may be variously applied depending on the design.

FIG. 4 is a perspective view of a vision portion according to an embodiment of the present invention.

The vision portion 220 may be disposed in the main inspection region to measure the position of the electrode 12. If the main inspection region is a plurality of regions, the vision portion 220 may comprise a plurality of vision portions 220. The vision portion 220 may be a singular vision portion 220.

The main inspection region may be at least one region among a region adjacent to one end of the heating portion 210 into which the electrode laminate 10 enters, and a region adjacent to the other end of the heating portion 210 from which the electrode laminate 10 exits. At this time, the vision portion 220 comprises a fore-end vision portion 221 and a rear-end vision portion 222 arranged to be spaced apart from each other along the x-direction (x) which is the transfer direction of the electrode laminate 10. Referring to the drawing, the fore-end vision portion 221 is disposed in a region adjacent to the right end of the heating portion 210 from which the preceding electrode laminate 10 exits, and the rear-end vision portion 222 is disposed in a region adjacent to the left end of the heating portion 210 into which the electrode laminate (10) enters.

Each of the fore-end vision portion 221 and the rear-end vision portion 222 may include a plurality of fore-end vision portions 221 and rear-end vision portions 222. For example, the fore-end vision portion 221 may comprise the first fore-end vision portion 221A and the second fore-end vision portion 221B disposed to be spaced apart from each other, along the y direction (y) perpendicular to the x direction (x) which is the transport direction of the electrode laminate (10) on the plane. Each of the first fore-end vision portion 221A and the second fore-end vision portion 221B may measure the position of each adjacent region in the y direction (y) of the electrode 12. The rear-end vision portion 222 may comprise the first rear-end vision portion 222A and the second rear-end vision portion 222B disposed to be spaced apart from each other, along the y direction (y) perpendicular to the x direction (x) which is the transport direction of the electrode laminate 10 on the plane. Each of the first rear-end vision portion 222A and the second rear-end vision portion 222B may measure the position of each adjacent region in the y-direction (y) of the electrode 12.

However, the number, arrangement shape, measurement position, etc. of each of the fore-end vision portion 221 and the rear-end vision portion 222 are not limited to the above-described form, and for example, it is natural that each of the fore-end vision portion 221 and the rear-end vision portion 222 may be a singular fore-end vision portion 221 and rear-end vision portion 222.

In this specification, the order of the first, second, etc. is for distinguishing the components from each other, and does not mean a priority order between the components or an absolute order. A first element in one part of this specification may be referred to as a second element in another part of this specification.

In this specification, directions such as the x-direction (x), the y-direction (y), the z-direction (z) and the like have been described based on the drawings. It is natural that the directions described in this specification may be described differently depending on viewpoints.

The terms and expressions herein should be interpreted broadly and should not be construed in a limiting sense. In this specification, the expression 'comprising' does not exclude the presence or addition of one or more other components other than the stated components. In this specification, the singular expression includes the plural unless explicitly excluded by context. In addition, each of the embodiments can be combined with each other, and unless contradicted, content described in a specific embodiment may also be applied to other embodiments.

### [Description of Symbol]

10: electrode laminate
11: Separator
12: Electrode
100: Conveying unit
200: Heating unit
210: Heating portion
220: Vision portion
230: Storage portion
300: Lamination unit

## Claims

1. An electrode laminate heating unit, comprising:
a heating portion (210) configured to heat an electrode laminate (10) in a moving direction of the electrode laminate (10), the electrode laminate (10) including an electrode (12) and a separator (11);
**characterized in that** electrode laminate heating unit further comprises:
a vision portion (220) configured to measure a position change of the electrode (12) in a region of the heating portion (210), and **in that** the heating portion (210) includes an accommodating region, the accommodating region being a hole (h) or a groove (g) in which the vision portion (220) is disposed.

2. The electrode laminate heating unit according to claim 1, wherein the vision portion (220) includes a fore-end vision portion (221) and a rear-end vision portion (222) disposed to be spaced apart in a longitudinal dimension from each other, the longitudinal dimension being orthogonal to a width dimension and the longitudinal dimension being parallel to a moving direction of the electrode laminate (10).

3. The electrode laminate heating unit according to claim 2, wherein the fore-end vision portion (221) includes a first fore-end vision portion (221A) and a second fore-end vision portion (221B) disposed to be spaced apart from each other in a direction perpendicular to the longitudinal dimension , and the rear-end vision portion (222) includes a first rear-end vision portion (222A) and a second rear-end vision portion (222B) disposed to be spaced apart from each other in the direction perpendicular to the longitudinal dimension.

4. The electrode laminate heating unit according to claim 1, wherein the vision portion (220) is configured to measure the position change of the electrode (12) when a temperature of the heating portion (210) fluctuates.

5. The electrode laminate heating unit according to claim 1, wherein the vision portion (220) is configured to measure the position change of the electrode (12) in at least one of a first initial stage and a first late stage of the heating portion (210), the initial stages being disposed in a region near an entrance of the heating portion (210) in the movement direction and the late stages being disposed in a region near an exit of the heating portion (210) in the movement direction.

6. The electrode laminate heating unit according to claim 1, wherein the vision portion (220) comprises a camera.

7. The electrode laminate heating unit according to claim 1, further comprising a storage portion (230) configured to collect position information of the electrode (12) measured by the vision portion (220).

8. An electrode laminate lamination apparatus, comprising:
a conveying unit (100) configured to convey an electrode laminate (10), the electrode laminate (10) including an electrode (12) and a separator (11);
a heating unit (200) configured to heat the electrode laminate (10); and
a lamination unit (300) configured to roll the electrode laminate (10),
wherein the heating unit (200) is a laminate heating unit as defined in claim 1.

## Patentansprüche

1. Elektrodenlaminat-Heizeinheit, umfassend:
einen Heizabschnitt (210), der konfiguriert ist, um ein Elektrodenlaminat (10) in einer Bewegungsrichtung des Elektrodenlaminats (10) zu erhitzen, wobei das Elektrodenlaminat (10) eine Elektrode (12) und einen Separator (11) einschließt;
**dadurch gekennzeichnet, dass** die Elektrodenlaminat-Heizeinheit ferner umfasst:
einen Sichtabschnitt (220), der konfiguriert ist, um eine Positionsänderung der Elektrode (12) in einem Bereich des Heizabschnitts (210) zu messen, und dadurch, dass der Heizabschnitt (210) einen Aufnahmebereich einschließt, wobei der Aufnahmebereich ein Loch (h) oder eine Nut (g) ist, in dem bzw. der Sichtabschnitt (220) angeordnet ist.

2. Elektrodenlaminat-Heizeinheit nach Anspruch 1, wobei der Sichtabschnitt (220) einen vorderseitigen Sichtabschnitt (221) und einen rückseitigen Sichtabschnitt (222) einschließt, die so angeordnet sind, dass sie in einer Längsabmessung voneinander beabstandet sind, wobei die Längsabmessung orthogonal zu einer Breitenabmessung ist und die Längsabmessung parallel zu einer Bewegungsrichtung des Elektrodenlaminats (10) ist.

3. Elektrodenlaminat-Heizeinheit nach Anspruch 2, wobei der vorderseitige Sichtabschnitt (221) einen ersten vorderseitigen Sichtabschnitt (221A) und einen zweiten vorderseitigen Sichtabschnitt (221B) einschließt, die so angeordnet sind, dass sie in einer Richtung senkrecht zur Längsabmessung voneinander beabstandet sind, und der rückseitige Sichtabschnitt (222) einen ersten rückseitigen Sichtabschnitt (222A) und einen zweiten rückseitigen Sichtabschnitt (222B) einschließt, die so angeordnet sind, dass sie in der Richtung senkrecht zur Längsabmessung voneinander beabstandet sind.

4. Elektrodenlaminat-Heizeinheit nach Anspruch 1, wobei der Sichtabschnitt (220) konfiguriert ist, um die Positionsänderung der Elektrode (12) zu messen, wenn eine Temperatur des Heizabschnitts (210) schwankt.

5. Elektrodenlaminat-Heizeinheit nach Anspruch 1, wobei der Sichtabschnitt (220) konfiguriert ist, um die Positionsänderung der Elektrode (12) in mindestens einer von einer ersten Anfangsstufe und einer ersten Spätstufe des Heizabschnitts (210) zu messen, wobei die Anfangsstufen in einem Bereich nahe einem Eingang des Heizabschnitts (210) in der Bewegungsrichtung angeordnet sind und die Spätstufen in einem Bereich nahe einem Ausgang des Heizabschnitts (210) in der Bewegungsrichtung angeordnet sind.

6. Elektrodenlaminat-Heizeinheit nach Anspruch 1, wobei der Sichtabschnitt (220) eine Kamera umfasst.

7. Elektrodenlaminat-Heizeinheit nach Anspruch 1, ferner umfassend einen Speicherabschnitt (230), der konfiguriert ist, um von dem Sichtabschnitt (220) gemessene Positionsinformationen der Elektrode (12) zu sammeln.

8. Elektrodenlaminat-Laminiervorrichtung, umfassend:
eine Fördereinheit (100), die konfiguriert ist, um ein Elektrodenlaminat (10) zu fördern, wobei das Elektrodenlaminat (10) eine Elektrode (12) und einen Separator (11) einschließt;
eine Heizeinheit (200), die konfiguriert ist, um das Elektrodenlaminat (10) zu erhitzen; und
eine Laminiereinheit (300), die konfiguriert ist, um das Elektrodenlaminat (10) zu rollen,
wobei die Heizeinheit (200) eine Laminat-Heizeinheit wie in Anspruch 1 definiert ist.

## Revendications

1. Une unité de chauffage de laminé d'électrode, comprenant :
une partie de chauffage (210) configurée pour chauffer un laminé d'électrode (10) dans une direction de déplacement du laminé d'électrode (10), le laminé d'électrode (10) incluant une électrode (12) et un séparateur (11) ;
**caractérisée en ce que** l'unité de chauffage de laminé d'électrode comprend en outre :
une partie de vision (220) configurée pour mesurer un changement de position de l'électrode (12) dans une région de la partie de chauffage (210), et **en ce que** la partie de chauffage (210) inclut une région de logement, la région de logement étant un trou (h) ou une rainure (g) dans laquelle la partie de vision (220) est disposée.

2. L'unité de chauffage de laminé d'électrode selon la revendication 1, dans laquelle la partie de vision (220) inclut une partie de vision d'extrémité avant (221) et une partie de vision d'extrémité arrière (222) disposées de manière à être espacées l'une de l'autre dans une dimension longitudinale, la dimension longitudinale étant orthogonale à une dimension en largeur et la dimension longitudinale étant parallèle à une direction de déplacement du laminé d'électrode (10).

3. L'unité de chauffage de laminé d'électrode selon la revendication 2, dans laquelle la partie de vision d'extrémité avant (221) inclut une première partie de vision d'extrémité avant (221A) et une seconde partie de vision d'extrémité avant (221B) disposées de manière à être espacées l'une de l'autre dans une direction perpendiculaire à la dimension longitudinale, et la partie de vision d'extrémité arrière (222) inclut une première partie de vision d'extrémité arrière (222A) et une seconde partie de vision d'extrémité arrière (222B) disposées de manière à être espacées l'une de l'autre dans la direction perpendiculaire à la dimension longitudinale.

4. L'unité de chauffage de laminé d'électrode selon la revendication 1, dans laquelle la partie de vision (220) est configurée pour mesurer le changement de position de l'électrode (12) lorsqu'une température de la partie de chauffage (210) fluctue.

5. L'unité de chauffage de laminé d'électrode selon la revendication 1, dans laquelle la partie de vision (220) est configurée pour mesurer le changement de position de l'électrode (12) dans au moins l'une d'une première étape initiale et d'une première étape tardive de la partie de chauffage (210), les étapes initiales étant disposées dans une région proche d'une entrée de la partie de chauffage (210) dans la direction de déplacement et les étapes tardives étant disposées dans une région proche d'une sortie de la partie de chauffage (210) dans la direction de déplacement.

6. L'unité de chauffage de laminé d'électrode selon la revendication 1, dans laquelle la partie de vision (220) comprend une caméra.

7. L'unité de chauffage de laminé d'électrode selon la revendication 1, comprenant en outre une partie de stockage (230) configurée pour collecter des informations de position de l'électrode (12) mesurées par la partie de vision (220).

8. Un appareil de laminage de laminé d'électrode, comprenant :
une unité de transport (100) configurée pour transporter un laminé d'électrode (10), le laminé d'électrode (10) incluant une électrode (12) et un séparateur (11) ;
une unité de chauffage (200) configurée pour chauffer le laminé d'électrode (10) ; et
une unité de laminage (300) configurée pour enrouler le laminé d'électrode (10),
dans lequel l'unité de chauffage (200) est une unité de chauffage de laminé telle que définie dans la revendication 1.
